# EUROPÄISCHE PATENTSCHRIFT

(11) **EP 2 912 299 B1**
(45) Veröffentlichungstag und Bekanntmachung des Hinweises auf die Patenterteilung: **30.11.2016**
(21) Anmeldenummer: 13762453.2
(22) Anmeldetag: 11.09.2013
(51) Int. Cl.: F02M 37/00, B01D 35/027, F02M 37/10, F02M 37/22

(54) **VORRICHTUNG ZUM FÖRDERN VON KRAFTSTOFF**
DEVICE FOR CONVEYING FUEL
DISPOSITIF DE TRANSPORT DE CARBURANT

(30) Priorität: 24.10.2012 DE 102012219399
(43) Veröffentlichungstag der Anmeldung: 02.09.2015
(73) Patentinhaber: Robert Bosch GmbH, 70442 Stuttgart (DE)
(72) Erfinder: ARROYO VALLES, Carmen, E-28014 Madrid (ES); BALAZ, Jan, 90701 Majava (SK); PTACEK, Martin, 37005 Ceske Budejovice (CZ); GARCIA BENITEZ, Cesar, 70193 Stuttgart (DE); ARIAS ARIAS, Jose Luis, E-28007 Madrid (ES)
(86) Internationale Anmeldenummer: PCT/EP2013/068782
(87) Internationale Veröffentlichungsnummer: WO 2014/063860

(56) Entgegenhaltungen:
- EP-A1- 2 094 965
- DE-A1- 10 119 554
- US-A1- 2005 016 506

## Beschreibung

### Stand der Technik

Die Erfindung geht aus von einer Vorrichtung zum Fördern von Kraftstoff nach der Gattung des Hauptanspruchs.
Es ist schon eine Vorrichtung zum Fördern von Kraftstoff aus der EP 2 094 965 B1 bekannt, mit einem Filtergehäuse, das zumindest zwei nebeneinander angeordnete Filteranschlüsse aufweist und in einer Aufnahme eines Deckels, der zum Verschließen einer Öffnung eines Kraftstofftanks vorgesehen ist, austauschbar angeordnet ist. Die Filteranschlüsse werden durch das Einstecken des Filtergehäuses in die Aufnahme des Deckels jeweils mit einer Kraftstoffleitung der Vorrichtung verbunden. Das Filtergehäuse wird mit Haltemitteln in der Aufnahme gehalten. Nachteilig ist, dass die hydraulischen Verbindungen zwischen den Filteranschlüssen und den Kraftstoffleitungen nach dem Einbau des Filtergehäuses in die Aufnahme des Deckels nicht zugänglich sind und dadurch nicht visuell überprüft werden können. Dies führt dazu, dass Fehler bei der Montage des Filtergehäuses, insbesondere bei einem Austausch des Filtergehäuses in den Autowerkstätten, und daraus resultierende technische Probleme, wie beispielsweise Leckagen, nicht oder nicht rechtzeitig erkannt werden.

### Vorteile der Erfindung

Die erfindungsgemäße Vorrichtung mit den kennzeichnenden Merkmalen des Hauptanspruchs hat demgegenüber den Vorteil, dass die hydraulischen Verbindungen zwischen den Filteranschlüssen und den Kraftstoffleitungen bei der Montage zugänglich und dadurch überprüfbar sind, indem ein Kupplungselement vorgesehen ist, an dem die Kraftstoffleitungen hydraulisch angeschlossen sind und das die Kraftstoffleitungen mit den Filteranschlüssen des Filtergehäuses lösbar verbindet. Bei einem Austausch des Filtergehäuses wird das Filtergehäuse bei geschlossenem hydraulischem System aus der Aufnahme herausgenommen. Anschließend wird das Kupplungselement gelöst, das alte Filtergehäuse entfernt und ein neues Filtergehäuse an das Kupplungselement angeclipst.

Durch die in den Unteransprüchen aufgeführten Maßnahmen sind vorteilhafte Weiterbildungen und Verbesserungen der im Hauptanspruch angegebenen Vorrichtung möglich.

Gemäß einem Ausführungsbeispiel verbindet das Kupplungselement die Kraftstoffleitungen mit den Filteranschlüssen des Filtergehäuses in nicht vertauschbarer Weise. Ein Anschließen der Kraftstoffleitungen an die falschen Filteranschlüsse ist dadurch nach dem Poka Yoke-Prinzip verhindert.

Vorteilhaft ist, wenn die Filteranschlüsse des Filtergehäuses jeweils in einen Anschlusskanal des Kupplungselementes hineinragen oder umgekehrt, da auf diese Weise eine einfache Abdichtung zwischen dem Filteranschluss des Filtergehäuses und dem Anschlusskanal des Kupplungselementes möglich ist, beispielsweise mittels von O-Ringen.

Besonders vorteilhaft ist, wenn die Filteranschlüsse und die korrespondierenden Anschlusskanäle zueinander derart unterschiedlich ausgeführt sind, dass das Kupplungselement nur in einer Position montierbar ist. Auf diese Weise wird verhindert, dass bei einem Austausch des Filtergehäuses die Anschlüsse falsch miteinander verbunden werden.

Weiterhin vorteilhaft ist, wenn das Kupplungselement mit zumindest zwei Rast- oder Schraubverbindungen an dem Filtergehäuse befestigbar ist, da auf diese Weise höhere Kräfte als bei nur einer Rast- oder Schraubverbindung aufgenommen werden können.

Sehr vorteilhaft ist es, wenn das Filtergehäuse zwei voneinander beabstandete Rastelemente und das Kupplungselement zwei weitere Rastelemente aufweist, wobei jeweils ein Rastelement des Filtergehäuses mit einem Rastelement des Kupplungselementes eine Rastverbindung bildet und wobei die Filteranschlüsse zwischen den Rastelementen angeordnet sind. Durch diesen Aufbau ist eine Dichtheit der zwei hydraulischen Verbindungen auch bei hohen Drücken im Filtergehäuse gewährleistet. Außerdem können die beiden Rastverbindungen sehr hohe hydraulische Kräfte aufnehmen.

Gemäß einem Ausführungsbeispiel der Erfindung weist ein Rastelement der Rastverbindung eine Ausnehmung auf, in die das andere Rastelement der Rastverbindung mit einer Auskragung einrastet.

Desweiteren vorteilhaft ist, wenn das Rastelement des Filtergehäuses jeweils durch einen am Filtergehäuse vorstehenden Steg gebildet ist, der jeweils durch eine Rastöffnung des Kupplungselementes hindurchragt, wobei die Ausnehmung an dem vorstehenden Steg des Filtergehäuses und die Auskragung in der Rastöffnung des Kupplungselementes vorgesehen ist.
Durch diesen Aufbau können die beiden Rastverbindungen durch Biegen der Stege zueinander hin mit einer Hand geöffnet werden.

Darüber hinaus vorteilhaft ist, wenn die Rastverbindung jeweils ein Zentrierelement umfasst, das vom Filtergehäuse vorsteht und zusammen mit dem Rastelement des Filtergehäuses in die Rastöffnung des Kupplungselementes hineinragt, wobei jeweils ein Rastelement und ein Zentrierelement einander gegenüberliegen und wobei das Zentrierelement jeweils zumindest abschnittsweise formschlüssig an der Wandung der Rastöffnung des Kupplungselementes anliegt. Auf diese Weise wird das Kupplungselement mit geringem Spiel an dem Filtergehäuse befestigt.

Vorteilhaft ist, wenn die beiden Rastelemente des Filtergehäuses auf der den Filteranschlüssen abgewandten Seite und die beiden Zentrierelemente auf der den Filteranschlüssen zugewandten Seite oder umgekehrt angeordnet sind, da die Rastverbindungen auf diese Weise durch ein nach innen gerichtetes Biegen der stegförmigen Rastelemente leicht geöffnet werden können.

Außerdem vorteilhaft ist, wenn die Auskragungen in den Rastöffnungen jeweils derart angeordnet sind, dass sie die Rastelemente des Filtergehäuses beim Fügen der Rastverbindung elastisch zueinander hin biegen. Durch diese Anordnung wird ein Öffnen der Rastverbindungen durch ein nach innen gerichtetes Biegen der stegförmigen Rastelemente ermöglicht.

### Zeichnung

Ein Ausführungsbeispiel der Erfindung ist in der Zeichnung vereinfacht dargestellt und in der nachfolgenden Beschreibung näher erläutert.
- Fig.1: zeigt eine erste Schnittansicht der erfindungsgemäßen Vorrichtung,
- Fig.2: eine zweite Schnittansicht der erfindungsgemäßen Vorrichtung nach Fig.1,
- Fig.3: einen Ausschnitt der Vorrichtung nach Fig.1 und Fig.2,
- Fig.4: eine Ansicht von unten auf das erfindungsgemäße Filtergehäuse nach Fig.1 und Fig.2,
- Fig.5: eine Ansicht von unten auf das erfindungsgemäße Filtergehäuse nach Fig.1, Fig.2 und Fig.4 mit einem erfindungsgemäßen Kupplungselement.

### Beschreibung des Ausführungsbeispiels

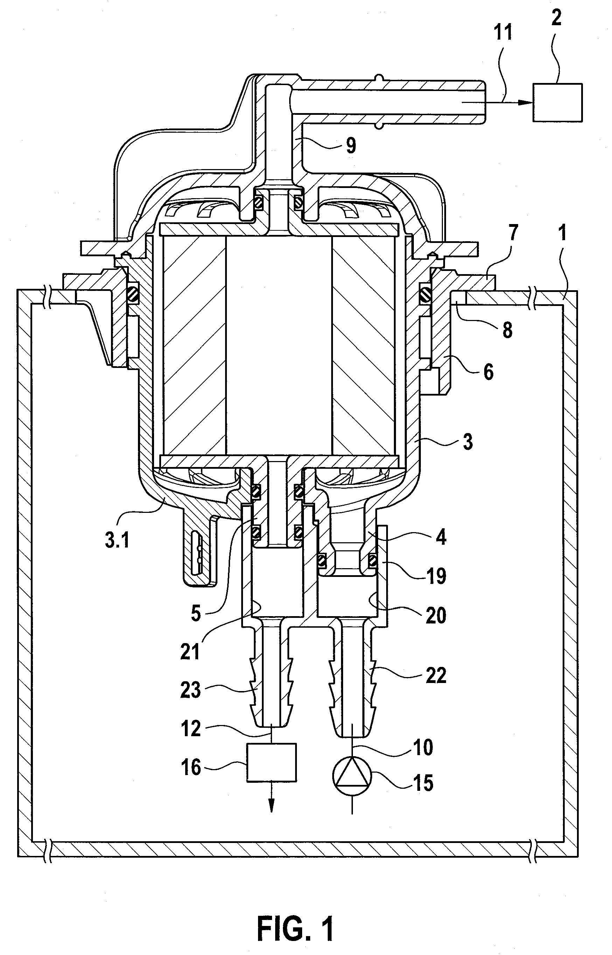

Fig.1 zeigt eine erste Schnittansicht der erfindungsgemäßen Vorrichtung.

Die erfindungsgemäße Vorrichtung dient dazu, Kraftstoff aus einem Kraftstofftank 1 zu einer Brennkraftmaschine 2 zu fördern.

Die Vorrichtung weist ein Filtergehäuse 3 auf, das zumindest zwei nebeneinander angeordnete Filteranschlüsse 4,5 aufweist und in einer Aufnahme 6 eines Deckels 7 austauschbar angeordnet ist. Der Deckel 7 ist beispielsweise dazu vorgesehen, eine Öffnung 8 im Kraftstofftank 1 dicht zu verschließen. Der Filteranschluss 4 des Filtergehäuses 3 ist beispielsweise ein Eingangsanschluss, durch den der Kraftstoff in das Filtergehäuse 3 gelangt. Der Filteranschluss 5 ist beispielsweise ein Ausgangsanschluss, durch den der Kraftstoff zurück in den Kraftstofftank 1 strömen kann. Das Filtergehäuse 3 weist außerdem einen weiteren Filteranschluss 9 auf, der einen Ausgangsanschluss bildet und den Kraftstoff zu der Brennkraftmaschine 1 gelangen lässt. Die Filteranschlüsse 4,5 und der Filteranschluss 9 sind beispielsweise an gegenüberliegenden Stirnseiten des Filtergehäuses 3 angeordnet, wobei die Filteranschlüsse 4,5 innerhalb des Kraftstofftanks 1 und der Filteranschluss 9 außerhalb des Kraftstofftanks 1 angeordnet ist. Beispielsweise sind die Filteranschlüsse 4,5 an einem Boden 3.1 des Filtergehäuses 3 angeordnet, der dem Innenraum des Kraftstofftanks 1 zugewandt ist.

Die Filteranschlüsse 4,5,9 sind jeweils mit einer Kraftstoffleitung 10,11,12 verbunden, wobei die Kraftstoffleitung 10 des Filteranschlusses 4 mit einem Förderaggregat 15 verbunden ist, das den Kraftstoff aus dem Kraftstofftank 1 ansaugt und über die Kraftstoffleitung 10, das Filtergehäuse 3, den Filteranschluss 9 und die Kraftstoffleitung 11 zu der Brennkraftmaschine 1 fördert. Am Filteranschluss 9 ist die Kraftstoffleitung 11 vorgesehen. Die Kraftstoffleitung 12 des Filteranschlusses 5 führt zu einem Druckregelventil 16, das Kraftstoff oberhalb eines vorbestimmten Druckes im Filtergehäuse 3 zurück in den Kraftstofftank 1 strömen lässt.

Erfindungsgemäß ist ein Kupplungselement 19 vorgesehen, an dem die Kraftstoffleitungen 10,12 hydraulisch in richtiger Weise angeschlossen sind und das die Kraftstoffleitungen 10,12 in nicht vertauschbarer Weise mit den Filteranschlüssen 4,5 des Filtergehäuses 3 lösbar verbindet. Auf diese Weise wird verhindert, dass das Filtergehäuse 3 bei einem Austausch des Filtergehäuses 3 in falscher Weise montiert wird.

Die Filteranschlüsse 4,5 des Filtergehäuses 3 ragen jeweils in einen Anschlusskanal 20,21 des Kupplungselementes 19 hinein. Außerdem hat das Kupplungselement 19 zwei Kupplungsanschlüsse 22,23, an denen die Kraftstoffleitungen 10,12 angeschlossen sind.

Die Filteranschlüsse 4,5 und die korrespondierenden Anschlusskanäle 20,21 sind zueinander derart unterschiedlich ausgeführt, dass das Kupplungselement 19 nur in einer Position montierbar ist. Gemäß dem Ausführungsbeispiel haben die Filteranschlüsse 4,5 einen unterschiedlichen Durchmesser und/oder eine unterschiedliche auskragende Höhe. Ein falsches Aufstecken des Kupplungselementes 19 ist dadurch verhindert.

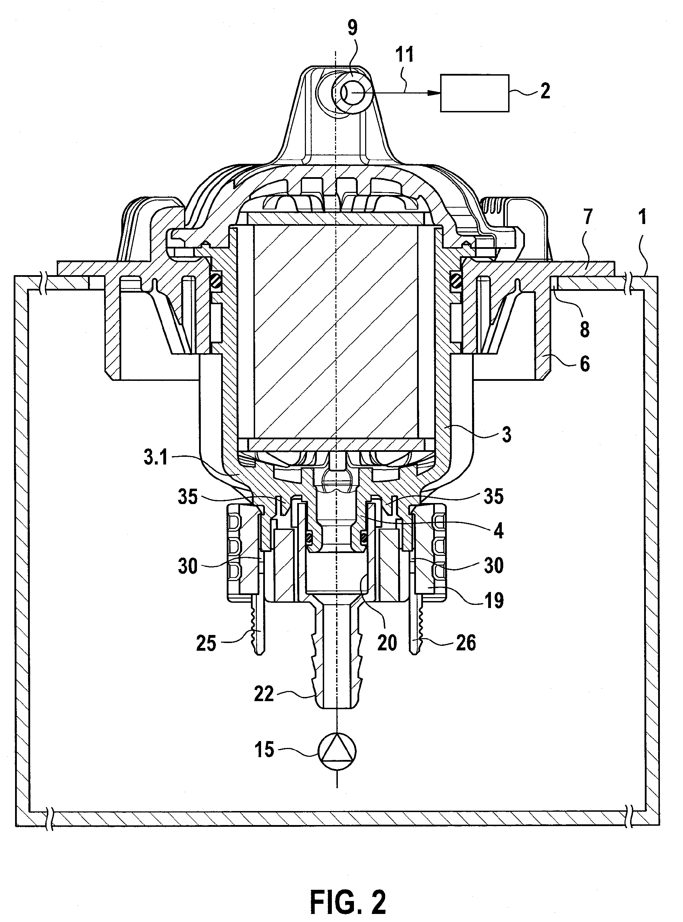

Fig.2 zeigt eine zweite Schnittansicht der erfindungsgemäßen Vorrichtung nach Fig.1.

Das Kupplungselement 19 ist mit zwei Rastverbindungen an dem Filtergehäuse 3 befestigt.

Das Filtergehäuse 3 weist dazu zwei voneinander beabstandete Rastelemente 25,26 auf, beispielsweise am Boden 3.1 des Filtergehäuses 3. Am Kupplungselement 19 sind zwei weitere Rastelemente 27,28 vorgesehen, wobei jeweils ein Rastelement 25,26 des Filtergehäuses 3 mit einem Rastelement 27,28 des Kupplungselementes eine Rastverbindung bildet. Die Filteranschlüsse 4,5 des Filtergehäuses 3 liegen dabei zwischen den Rastelementen 25-28.

Bei einem Austausch des Filtergehäuses 3 wird das Filtergehäuse 3 bei geschlossenem hydraulischem System, also mit dem angeschlossenen Kupplungselement 19 und den damit verbundenen Kraftstoffleitungen 10,12, aus der Aufnahme 6 herausgenommen. Die Kraftstoffleitungen 10,12 sind dazu entsprechend lang ausgeführt. Anschließend wird das Kupplungselement 19 durch Betätigen der Rastelemente 25,26 gelöst, das alte Filtergehäuse 3 entfernt und ein neues Filtergehäuse 3 an das Kupplungselement 19 angeclipst. Ein falsches Anschließen des Kupplungselementes 19 ist durch die erfindungsgemäße Ausführung verhindert. Daraufhin wird das neue Filtergehäuse 3 mit dem angeschlossenen Kupplungselement und den Kraftstoffleitungen wieder in die Aufnahme 6 des Deckels 7 eingesetzt und befestigt.

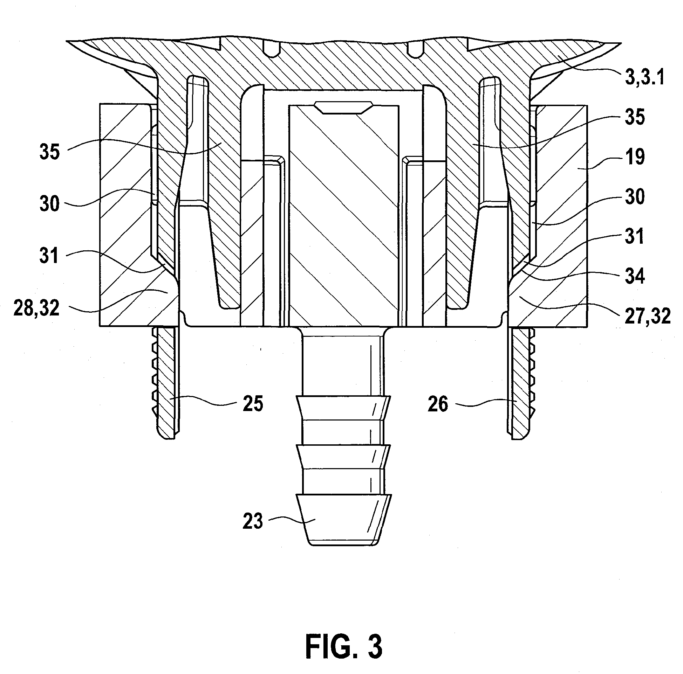

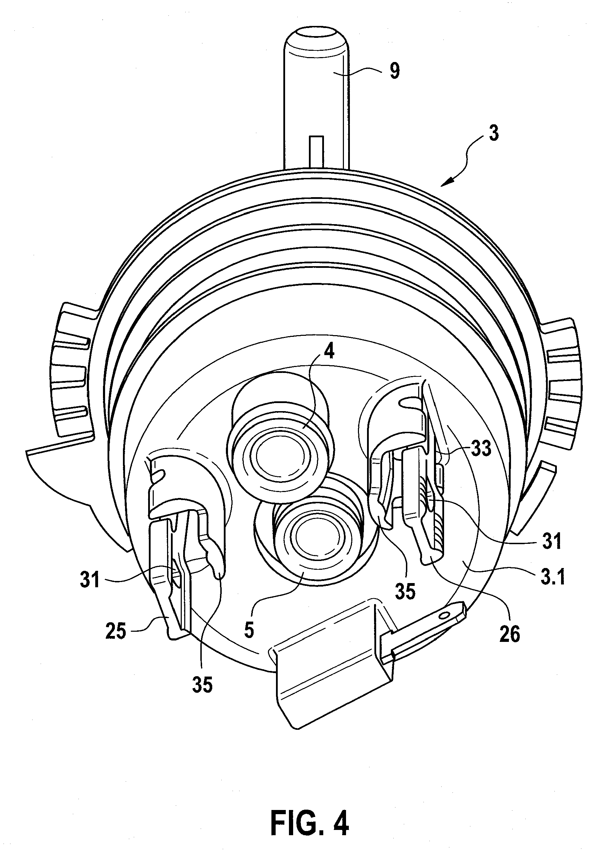

Fig.3 zeigt einen Ausschnitt der Vorrichtung nach Fig.1 und Fig.2 mit dem erfindungsgemäßen Kupplungselement. Fig.4 zeigt eine Ansicht von unten auf das erfindungsgemäße Filtergehäuse nach Fig.1 und Fig.2.

Gemäß dem Ausführungsbeispiel weist das eine Rastelement 25-28 einer Rastverbindung eine Ausnehmung 31 auf, in die das andere Rastelement 25-28 der Rastverbindung mit einer Auskragung 32 einrastet, beispielsweise formschlüssig einrastet.
Beispielsweise sind die Form der Auskragung 32 und die Form der Ausnehmung 31 komplementär zueinander ausgebildet. Die Auskragung 32 weist auf der dem Filterboden 3.1 zugewandten Seite eine Fügeschräge 34 auf, um das Einfügen des Steges 25,26 in die Rastöffnung 30 zu erleichtern.

Die Rastelemente 25,26 des Filtergehäuses 3 sind beispielsweise jeweils durch einen am Filtergehäuse 3 vorstehenden Steg gebildet, der jeweils durch eine Rastöffnung 30 des Kupplungselementes 19 hindurchragt, wobei die Ausnehmung 31 an dem vorstehenden Steg des Filtergehäuses 3 und die Auskragung 32 in der Rastöffnung 30 des Kupplungselementes 19 vorgesehen ist. Der Steg 25,26 weist zwischen dem Boden 3.1 des Filtergehäuses 3 und der Ausnehmung 31 eine Verengung 33 auf, um die Biegung des Steges 25,26 in den Bereich der Verengung zu legen (Fig.4). Der Steg 25,26 ist beispielsweise an seinem dem Filterboden 3.1 abgewandten Ende aufgerauht, beispielsweise durch eine Rippelung oder ein Rändel, so dass ein Abrutschen von den Stegen 25,26 vermieden wird.

Die Rastverbindung umfasst jeweils beispielsweise auch ein Zentrierelement 35, das vom Filtergehäuse 3 vorsteht und zusammen mit dem Rastelement 25,26 des Filtergehäuses 3 in die Rastöffnung 30 des Kupplungselementes 19 hineinragt, wobei das Rastelement 25,26 und das Zentrierelement 35 einander gegenüberliegen (Fig.3 und Fig.4). Das Zentrierelement 35 liegt jeweils zumindest abschnittsweise formschlüssig an der Wandung der Rastöffnung 30 des Kupplungselementes 19 an. Dabei sind die Zentrierelemente 35 jeweils auf der den Filteranschlüssen 4,5 zugewandten Seite und die beiden Rastelemente 25,26 des Filtergehäuses 3 auf der den Filteranschlüssen 4,5 abgewandten Seite angeordnet (Fig.4)

Die Auskragungen 32 in den Rastöffnungen 30 sind jeweils derart angeordnet, dass sie die Rastelemente 25,26 des Filtergehäuses 3 beim Fügen der Rastverbindung elastisch zueinander hin biegen.

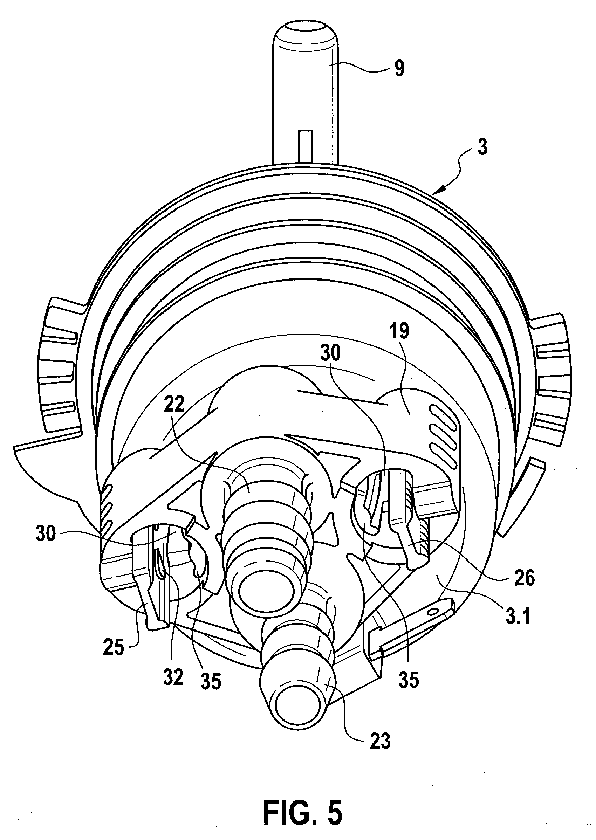

Fig.5 zeigt eine Ansicht von unten auf das erfindungsgemäße Filtergehäuse nach Fig.1, Fig.2 und Fig.4 mit dem erfindungsgemäßen Kupplungselement.

## Patentansprüche

1. Vorrichtung zum Fördern von Kraftstoff mit einem Filtergehäuse (3), das zumindest zwei nebeneinander angeordnete Filteranschlüsse (4,5) aufweist und in einer Aufnahme (6) eines Deckels (7) austauschbar angeordnet ist, wobei die Filteranschlüsse (4,5) jeweils mit einer Kraftstoffleitung (10,12) verbunden sind, **dadurch gekennzeichnet, dass** ein Kupplungselement (19) vorgesehen ist, an dem die Kraftstoffleitungen (10,12) hydraulisch angeschlossen sind und das die Kraftstoffleitungen (10,12) mit den Filteranschlüssen (4,5) des Filtergehäuses (3) lösbar verbindet.

2. Vorrichtung nach Anspruch 1, **dadurch gekennzeichnet, dass** das Kupplungselement (19) die Kraftstoffleitungen (10,12) mit den Filteranschlüssen (4,5) des Filtergehäuses (3) in nicht vertauschbarer Weise verbindet.

3. Vorrichtung nach einem der vorhergehenden Ansprüche, **dadurch gekennzeichnet, dass** die Filteranschlüsse (4,5) des Filtergehäuses (3) jeweils in einen Anschlusskanal (20,21) des Kupplungselementes (19) hineinragen oder umgekehrt.

4. Vorrichtung nach einem der vorhergehenden Ansprüche, **dadurch gekennzeichnet, dass** die Filteranschlüsse (4,5) und die korrespondierenden Anschlusskanäle (20,21) derart unterschiedlich ausgeführt sind, dass das Kupplungselement (19) nur in einer Position montierbar ist.

5. Vorrichtung nach einem der vorhergehenden Ansprüche, **dadurch gekennzeichnet, dass** das Kupplungselement (19) mit zumindest zwei Rast- oder Schraubverbindungen an dem Filtergehäuse (3) befestigbar ist.

6. Vorrichtung nach einem der vorhergehenden Ansprüche, **dadurch gekennzeichnet, dass** das Filtergehäuse (3) zwei voneinander beabstandete Rastelemente (25,26) und das Kupplungselement (19) zwei weitere Rastelemente (27,28) aufweist, wobei jeweils ein Rastelement (25,26) des Filtergehäuses (3) mit einem Rastelement (27,28) des Kupplungselementes (19) eine Rastverbindung bildet und wobei die Filteranschlüsse (4,5) zwischen den Rastelementen (25-28) angeordnet sind.

7. Vorrichtung nach einem der vorhergehenden Ansprüche, **dadurch gekennzeichnet, dass** das eine Rastelement (25,26) der Rastverbindung eine Ausnehmung (31) aufweist, in die das andere Rastelement (27,28) der Rastverbindung mit einer Auskragung (32) einrastet.

8. Vorrichtung nach einem der vorhergehenden Ansprüche, **dadurch gekennzeichnet, dass** das Rastelement (25,26) des Filtergehäuses (3) jeweils durch einen am Filtergehäuse (3) vorstehenden Steg gebildet ist, der jeweils durch eine Rastöffnung (30) des Kupplungselementes (19) hindurchragt, wobei die Ausnehmung (31) an dem vorstehenden Steg (25,26) des Filtergehäuses (3) und die Auskragung (32) in der Rastöffnung (30) des Kupplungselementes (19) vorgesehen ist.

9. Vorrichtung nach einem der vorhergehenden Ansprüche, **dadurch gekennzeichnet, dass** die Rastverbindung jeweils ein Zentrierelement (35) umfasst, das vom Filtergehäuse (3) vorsteht und zusammen mit dem Rastelement (25,26) des Filtergehäuses (3) in die Rastöffnung (30) des Kupplungselementes (19) hineinragt, wobei jeweils ein Rastelement (25,26) und ein Zentrierelement (35) einander gegenüberliegen und wobei das Zentrierelement (35) zumindest abschnittsweise formschlüssig an der Wandung der Rastöffnung (30) des Kupplungselementes (19) anliegt.

10. Vorrichtung nach einem der vorhergehenden Ansprüche, **dadurch gekennzeichnet, dass** die Zentrierelemente (35) jeweils auf der den Filteranschlüssen (4,5) zugewandten Seite und die Rastelemente (25,26) des Filtergehäuses (3) jeweils auf der den Filteranschlüssen (4,5) abgewandten Seite oder umgekehrt angeordnet sind.

11. Vorrichtung nach einem der vorhergehenden Ansprüche, **dadurch gekennzeichnet, dass** die Auskragungen (32) in den Rastöffnungen (30) jeweils derart angeordnet sind, dass sie die Rastelemente (25,26) des Filtergehäuses (3) beim Fügen der Rastverbindung elastisch zueinander hin biegen.

## Claims

1. Apparatus for delivering fuel having a filter housing (3) which has at least two filter connectors (4, 5) which are arranged next to one another and is arranged exchangeably in a receptacle (6) of a cover (7), the filter connectors (4, 5) being connected in each case to a fuel line (10, 12), **characterized in that** a coupling element (19) is provided, to which the fuel lines (10, 12) are connected hydraulically and which releasably connects the fuel lines (10, 12) to the filter connectors (4, 5) of the filter housing (3).

2. Apparatus according to Claim 1, **characterized in that** the coupling element (9) connects the fuel lines (10, 12) to the filter connectors (4, 5) of the filter housing (3) such that they cannot be mixed up.

3. Apparatus according to either of the preceding claims, **characterized in that** the filter connectors (4, 5) of the filter housing (3) protrude in each case into a connector duct (20, 21) of the coupling element (19) or vice versa.

4. Apparatus according to one of the preceding claims, **characterized in that** the filter connectors (4, 5) and the corresponding connector ducts (20, 21) are of different configuration in such a way that the coupling element (19) can be mounted only in one position.

5. Apparatus according to one of the preceding claims, **characterized in that** the coupling element (19) can be fastened to the filter housing (3) by way of at least two latching or screw connections.

6. Apparatus according to one of the preceding claims, **characterized in that** the filter housing (3) has two latching elements (25, 26) which are spaced apart from one another, and the coupling element (19) has two further latching elements (27, 28), in each case one latching element (25, 26) of the filter housing (3) forming a latching connection with a latching element (27, 28) of the coupling element (19), and the filter connectors (4, 5) being arranged between the latching elements (25-28).

7. Apparatus according to one of the preceding claims, **characterized in that** the one latching element (25, 26) of the latching connection has a recess (31), into which the other latching element (27, 28) of the latching connection latches by way of a projection (32).

8. Apparatus according to one of the preceding claims, **characterized in that** the latching element (25, 26) of the filter housing (3) is formed in each case by way of a web which projects on the filter housing (3) and penetrates in each case through a latching opening (30) of the coupling element (19), the recess (31) being provided on the projecting web (25, 26) of the filter housing (3), and the projection (32) being provided in the latching opening (30) of the coupling element (19).

9. Apparatus according to one of the preceding claims, **characterized in that** the latching connection comprises in each case one centring element (35) which projects from the filter housing (3) and protrudes together with the latching element (25, 26) of the filter housing (3) into the latching opening (30) of the coupling element (19), in each case one latching element (25, 26) and one centring element (35) lying opposite one another, and the centring element (35) bearing at least in sections in a positively locking manner against the wall of the latching opening (30) of the coupling element (19).

10. Apparatus according to one of the preceding claims, **characterized in that** the centring elements (35) are arranged in each case on the side which faces the filter connectors (4, 5), and the latching elements (25, 26) of the filter housing (3) are arranged in each case on the side which faces away from the filter connectors (4, 5), or vice versa.

11. Apparatus according to one of the preceding claims, **characterized in that** the projections (32) are arranged in the latching openings (30) in each case in such a way that they bend the latching elements (25, 26) of the filter housing (3) elastically towards one another during joining of the latching connection.

## Revendications

1. Dispositif de transport de carburant comprenant un boîtier de filtre (3) qui présente au moins deux raccords de filtre (4, 5) disposés l'un à côté de l'autre et qui est disposé de manière remplaçable dans un logement (6) d'un couvercle (7), les raccords de filtre (4, 5) étant à chaque fois connectés à une conduite de carburant (10, 12), **caractérisé en ce qu'**un élément d'accouplement (19) est prévu, au niveau duquel sont raccordées hydrauliquement les conduites de carburant (10, 12) et lequel relie de manière détachable les conduites de carburant (10, 12) aux raccords de filtre (4, 5) du boîtier de filtre (3).

2. Dispositif selon la revendication 1, **caractérisé en ce que** l'élément d'accouplement (19) relie de manière non interchangeable les conduites de carburant (10, 12) aux raccords de filtre (4, 5) du boîtier de filtre (3).

3. Dispositif selon l'une quelconque des revendications précédentes, **caractérisé en ce que** les raccords de filtre (4, 5) du boîtier de filtre (3) pénètrent à chaque fois dans un canal de raccordement (20, 21) de l'élément d'accouplement (19) ou inversement.

4. Dispositif selon l'une quelconque des revendications précédentes, **caractérisé en ce que** les raccords de filtre (4, 5) et les canaux de raccordement correspondants (20, 21) sont réalisés différemment de telle sorte que l'élément d'accouplement (19) ne puisse être monté que dans une seule position.

5. Dispositif selon l'une quelconque des revendications précédentes, **caractérisé en ce que** l'élément d'accouplement (19) peut être fixé au boîtier de filtre (3) avec au moins deux connexions par encliquetage ou par vissage.

6. Dispositif selon l'une quelconque des revendications précédentes, **caractérisé en ce que** le boîtier de filtre (3) présente deux éléments d'encliquetage (25, 26) espacés l'un de l'autre et l'élément d'accouplement (19) présente deux éléments d'encliquetage supplémentaires (27, 28), un élément d'encliquetage (25, 26) du boîtier de filtre (3) formant à chaque fois avec un élément d'encliquetage (27, 28) de l'élément d'accouplement (19) une connexion par encliquetage et les raccords de filtre (4, 5) étant disposés entre les éléments d'encliquetage (25-28).

7. Dispositif selon l'une quelconque des revendications précédentes, **caractérisé en ce que** l'un des éléments d'encliquetage (25, 26) de la connexion par encliquetage présente un évidement (31) dans lequel s'encliquète avec une saillie (32) l'autre élément d'encliquetage (27, 28) de la connexion par encliquetage.

8. Dispositif selon l'une quelconque des revendications précédentes, **caractérisé en ce que** l'élément d'encliquetage (25, 26) du boîtier de filtre (3) est à chaque fois formé par une nervure saillant au niveau du boîtier de filtre (3), laquelle pénètre à chaque fois à travers une ouverture d'encliquetage (30) de l'élément d'accouplement (19), l'évidement (31) étant prévu au niveau de la nervure saillante (25, 26) du boîtier de filtre (3) et la saillie (32) étant prévue dans l'ouverture d'encliquetage (30) de l'élément d'accouplement (19).

9. Dispositif selon l'une quelconque des revendications précédentes, **caractérisé en ce que** la connexion par encliquetage comprend à chaque fois un élément de centrage (35) qui fait saillie depuis le boîtier de filtre (3) et qui pénètre conjointement avec l'élément d'encliquetage (25, 26) du boîtier de filtre (3) dans l'ouverture d'encliquetage (30) de l'élément d'accouplement (19), un élément d'encliquetage (25, 26) et un élément de centrage (35) étant à chaque fois opposés l'un à l'autre et l'élément de centrage (35) s'appliquant au moins en partie par engagement par correspondance de formes contre la paroi de l'ouverture d'encliquetage (30) de l'élément d'accouplement (19).

10. Dispositif selon l'une quelconque des revendications précédentes, **caractérisé en ce que** les éléments de centrage (35) sont disposés à chaque fois sur le côté tourné vers les raccords de filtre (4, 5) et les éléments d'encliquetage (25, 26) du boîtier de filtre (3) sont disposées à chaque fois sur le côté opposé aux raccords de filtre (4, 5) ou inversement.

11. Dispositif selon l'une quelconque des revendications précédentes, **caractérisé en ce que** les saillies (32) sont disposées dans les ouvertures d'encliquetage (30) à chaque fois de telle sorte qu'elles fassent fléchir élastiquement l'un vers l'autre les éléments d'encliquetage (25, 26) du boîtier de filtre (3) lors de l'assemblage de la connexion par encliquetage.
